# EUROPÄISCHE PATENTANMELDUNG

(11) **EP 1 626 195 A1**
(43) Veröffentlichungstag der Anmeldung: **15.02.2006**
(21) Anmeldenummer: 05015164.6
(22) Anmeldetag: 13.07.2005
(51) Int. Cl.: F16F 13/14, B60G 7/04

(54) **Gummilager mit Wegbegrenzern**

(30) Priorität: 16.07.2004 DE 102004034578
(71) Anmelder: ZF FRIEDRICHSHAFEN AG, 88038 Friedrichshafen (DE)
(72) Erfinder: Siemer, Hubert, 49413 Dinklage (DE); Duisen, Frank, 49401 Damme (DE); Tepe, Frank, 48477 Hörstel (DE)

(57) **Zusammenfassung**

Die Erfindung betrifft ein Gummilager mit einem als elastomere Feder ausgebildeten Lagerkörper (1), bei welchem der Federweg des Lagerkörpers in zumindest einer Dämpfungsrichtung durch Wegbegrenzer (2,2',3,3') eingeschränkt ist. Der bzw. die Wegbegrenzer werden durch mindestens zwei korrespondierende Anschlagelemente ausgebildet, wobei der Federweg des elastomeren Lagerkörpers (1) in der betreffenden Richtung durch den Abstand beziehungsweise Spalt zwischen den Anschlagflächen der den Wegbegrenzer ausbildenden Anschlagelemente bestimmt ist. Aufgabe ist es, das Gummilager so auszubilden, dass es in seinem Dämpfungsverhalten an sich ändernde Vorlasten anpassbar ist.
Dazu ist mindestens ein Wegbegrenzer so ausgebildet, dass die Lagefixierung eines seiner Anschlagelemente (2,2',3,3') aufhebbar, der Abstand der Anschlagfläche dieses Anschlagelements zur der des korrespondierenden Anschlagelementes veränderbar und das betreffende Anschlagelement in seiner neuen Lage wieder lagefixierbar ist. Die Lageveränderung des Anschlagelements wird erfindungsgemäß mittels eines am Lager angeordneten Stellgliedes oder durch vorübergehendes Lösen eines Feststellmittels (7) und Nachführen der Lage des Anschlagelements entsprechend der Vorlast bewirkt.

## Beschreibung

Die Erfindung betrifft ein Gummilager mit einem als elastomere Feder ausgebildeten Lagerkörper, bei welchem der Federweg des Lagerkörpers in zumindest einer Dämpfungsrichtung durch Wegbegrenzer eingeschrankt ist. Entsprechend Ausbildungsform bezieht sich die Erfindung insbesondere auf ein elastomeres Buchsenlager mit Axialanschlägen.

Es ist bekannt. Gummilager, wie beispielsweise Buchsenlager zur Lagerung der Lenker von Fahrwerksaufhängungen bei Kraftfahrzeugen oder Motorlager, mit Anschlägen beziehungsweise Wegbegrenzern auszubilden, durch welche der Federweg des beim Eintrag von Schwingungen einfedernden Lagerkörpers begrenzt wird. Hierdurch wird verhindert, dass das Lager durch zu starke Verformungen beziehungsweise Überdehnungen seines elastomeren Lagerkörpers zerstört wird. Dabei sind die Anschläge, insbesondere bei Lagern mit weicher Federcharakteristik, in der Regel so ausgelegt, dass die durch sie bewirkte Wegbegrenzung nicht abrupt, sondern allmählich einsetzt. Dies wird dadurch erreicht, dass die Anschlagflächen zumindest teilweise ebenfalls aus einem Elastomer gebildet sind. Hierdurch werden im Falle des Eintretens der Wegbegrenzung störende Vibrativns- und Geräuscheffekte vermieden.

Durch die Festlegung der bis zum Eintreten der Wegbegrenzung möglichen Federwege des elastomeren Lagerkörpers wird für das Lager innerhalb des seine Federcharakteristik beschreibenden Kennlinienfeldes ein Arbeitsbereich definiert. Nach dem Stand der Technik sind die Anschlagelemente der Wegbegrenzer am beziehungsweise im Lager an fester Position angeordnet. Im Falle einer Veränderung der auf das Lager einwirkenden Vorlast, wie sie beispielsweise an einem Fabrwsrkslager eines Kraftfahrzeugs bei erhöhter Zuladung auftritt, hat dies jedoch den Nachteil, dass sich der Arbeitsbereich des Lagers innerhalb seiner Dämpfungskennlinie in den progressiven Ast der Federcharakteristik verschiebt. Das heißt, es reduziert sich der Freiweg seine elastomeren Feder auf der Einfederseite, während er sich gleichzeitig auf der Ausfederseite erhöht. Das Lager arbeitet aufgrund der Veränderung der Vorlast, bezogen auf den gegebenen Gesamtfederweg seiner elastomeren Feder nicht mehr in einem symmetrischen Arbeitsbereich, da der Anschlag beziehungsweise der Wegbegrenzer durch den Federkörper, bezogen auf eine Einfederrichtung, eher erreicht wird, als in der entgegengesetzten Richtung, Am Fahrzeug macht sich dies durch eine Verschlechterung der Fahrdynamik und des Komforts bemerkbar.

Aufgabe der Erfindung ist es daher, ein Gummilager so auszubilden, dass dieses in seinem Dämpfungsverhalten an sich ändernde Vorlasten anpassbar ist.

Die Aufgabe wird durch ein Gummilager mit den Merkmalen des Hauptanspruchs gelöst. Vorteilhafte Aus- beziehungsweise Weiterbildungen des erfindungsgemäßen Gummilagers sind durch die Unteransprüche gegeben. Dabei liegt es für den Fachmann auf der Hand, dass sich die vorgestellte Lösung allgemein auf ein Lager mit einem elastomeren Lagerkörper bezieht, wobei es sich bei dem Elastomer nicht zwangsläufig um Gummi handeln muss. Der Begriff Gummilager findet daher lediglich im Hinblick auf die dadurch gegebene Kürze der Formulierung und unter Berücksichtigung der Tatsache Verwendung, dass es sich bei dem Elastomer zumeist um Gummi handelt, stellt aber, mit Blick auf andere elastomere Materialien; keine Beschränkung dar.

Die Erfindung geht aus von einem Gummilager, dessen Lagerkörper als eine elastomere Feder ausgebildet ist, welche in das Lager eingetragene Schwingungen in axialer und/oder in radialer Richtung dämpft. Weiterhin ist das Gummilager mit Anschlagelementen ausgestattet, durch welche ein oder mehrere Wegbegrenzer gebildet sind, die den Federweg des elastomeren Lagerkörpers beziehungsweise des Federkörpers zumindest bezogen auf eine Dämpfungsrichtung einschränken Der Freiweg der elastomeren Feder wird dabei durch den Abstand beziehungsweise Spalt zwischen den Anschlagflächen der den Wegbegrenzer in der jeweiligen Richtung ausbildenden korrespondierenden Anschlagelemente bestimmt, wobei eines der Anschlagelemente am oder im Lager lagefixiert ist, während ein mit ihm korrespondierendes Anschlagelement nur gegenüber der elastomeren Feder lagefixiert ist und sich folglich beim Einfedern des Lagerkörpers mit der Feder bewegen kann.

Der gestellten Aufgabe folgend, ist bei dem erfindungsgemäßen Gummilager die Einschränkung des Federwegs zumindest in einer Dämpfungsrichtung an die im Betrieb des Lagers in dieser Richtung gegebene Vorlast anpassbar. Dazu ist der betreffende Wegbegrenzer so ausgebildet, dass die Lagefixierung eines seiner Anschlagelemente aufhebbar, der Abstand der Anschlagfläche dieses Anschlagelementes zur der des korrespondierenden Anschlagelementes veränderbar und das betreffende Anschlagelement in seiner neuen Lage wieder lagefixierbar ist. Die Lageveränderung des Anschlagelements wird erfindungsgemäß mittels eines am Lager angeordneten Stellgliedes oder durch vorübergehendes Lösen eines Feststellmittels und Nachführen der Lage des Anschlagelements entsprechend der Vorlast bewirkt. Ersteres, also die angesteuerte Bewegung des Anschlagelementes mittels eines dazu geeigneten Stellgliedes stellt ein aktives Anpassen der Lage der Anschlagelemente an die bestehende Vorlast dar, während im letztgenannten Fall das betreffende Anschlagelement nur in der Bewegung freigegeben und durch das anschlagende komplementäre Anschlagelement bis zum Erreichen einer vorgegebenen Sollposition entsprechend der Vorlaständerung quasi "mitgeschleift" sowie in dieser Position wieder fixiert wird. Auch bei dem erfindungsgemäßen Gummilager sind die oder zumindest ein Wegbegrenzer vorzugsweise so ausgelegt, dass die Wegbegrenzung nicht abrupt einsetzt. Dazu besitzt mindestens eines der den betreffenden Wegbegrenzer ausbildenden Anschlagelemente eine von einem Elastomer gebildete Anschlagfläche.

Eine besonders praxisrelevante Anwendung findet die Erfindung bei einem Gummilager, welches als ein elastomeres Buchsenlager mit Axialanschlägen ausgebildet ist. Das Buchsenlager besteht dabei, in an sich bekannter Weise, aus einem, in der Regel metallischen Innenteil, dem konzentrisch dazu angeordneten elastomeren Lagerkörper und einer das Innenteil mit dem Lagerkörper aufnehmenden Außenhülse. Die genannten Teile des Lagers sind durch Vulkanisation miteinander verbunden. Am beziehungsweise im Lager oder in Form einer parallel angeordneten, mit ihm verbundenen Baugruppe sind Anschlagelemente zur Ausbildung von Wegbegrenzern angeordnet, durch welche die beim Einfedern des Lagerkörpers auftretende axiale Bewegung begrenzt wird. Je nach vorgesehenem Einsatzzweck kann das Buchsenlager darüber hinaus als Hydrolager ausgebildet sein, wobei in seinem Lagerkörper mindestens zwei über einen Strömungskanal miteinander verbundene Kammern zur Aufnahme eines fluiden Dämpfungsmittels ausgebildet sind.

Wie bereits angedeutet, sind unterschiedliche Möglichkeiten der Anordnung und Ausbildung der Wegbegrenzer beziehungsweise Anschläge möglich. Dies bezieht sich insbesondere darauf, ob die Anschlagelemente und das Stellglied oder das entsprechende, die Lage der Anschlagelemente fixierende Feststellmittel als quasi integraler Bestandteil des Lagers oder als eine parallel angeordnete Baugruppe ausgebildet sind. Gemäß einer vorgesehenen Ausführungsform einer nach der Erfindung gestalteten Gummibuchse mit Axialanschlägen sind zur Ausbildung der Axialanschläge an beiden axialen Lagerenden Anschlagelemente konzentrisch zur Lagerachse angeordnet. Dabei ist ein Anschlagelement jedes Wegbegrenzers als ein metallischer Anschlagteller ausgebildet, welcher mit dem Innenteil verbunden und dadurch gegenüber der Lageranordnung insgesamt lagefixiert ist. Das jeweils korrespondierende Anschlagelement ist mit der elastomeren. Feder, also dem Lagerkörper, verbunden und dabei gegenüber der Feder lagefixiert. Dem Grundgedanken der Erfindung folgend, ist aber die Lagefixierung des letztgenannten Anschlagelementes vorübergehend aufhebbar und der Abstand seiner Anschlagfläche gegenüber dem korrespondierenden Anschlagteller zur Anpassung an die Vorlast veränderbar.

Bei einer anderen Ausbildungsform eines Buchsenlagers sind die Axialanschläge gemeinsam mit einem geeigneten Stellglied oder Feststellmittel als Baugruppe an einem der axialen Enden des Lagers parallel zur Lagerachse und außerhalb der Außenhülse angeordnet. Dabei sind erste Anschlagelemente beidseits eines mit dem an diesem Lagerende aus der Lagerhülse herausragenden Lagerkörper verbundenen, sich radial nach außen erstreckenden Halteelements angeordnet. Diese ersten Anschlagelemente ragen in ein u-förmiges zweites Anschlagelement hinein. Jeweils eines der an dem Halteelement angeordneten ersten Anschlagelemente und einer der sich quer zur Lagerachse erstreckenden Schenkel des u-förmigen zweiten Anschlagelementes bilden bei dieser Ausführungsform einen Wegbegrenzer aus. Die Baugruppe aus Wegbegrenzern und Stellglied beziehungsweise Feststellmittel ist dabei so ausgebildet, dass die axiale Lage des u-förmigen Anschlagelementes unter vorübergehender Aufhebung seiner Lagefixierung veränderbar ist.

Entsprechend einer bevorzugten Ausbildungsform des erfindungsgemäßen Gummilagers sind das Stellglied oder das Feststellmittel, welche bereits mehrfach angesprochen wurden durch einen Hydraulikzylinder realisiert. Dieser fungiert im Falle der Möglichkeit einer aktiven Anpassung des Lagers an eine sich ändernde Vorlast als Stellglied, welches in Reaktion auf eine Vorlaständerung in der Weise angesteuert wird, dass das Anschlagelement eines Wegbegrenzers mittels des mit ihm über eine Kolbenstange verbundenen Kolbens des Hydraulikzylinders gezielt, also aktiv, in eine vorgegebene Position bewegt wird. Entsprechend einer anderen, die passive Anpassung an Vorlaständerungen betreffenden Möglichkeit kann jedoch der Hydraulikzylinder, bei entsprechender Gestaltung auch als ein lösbares Feststellmittel wirken, welches im Falle seines Lösens ein entsprechendes Anschlagelement zwar nicht selbst in eine andere Position bewegt, aber dessen Bewegung in eine andere Position unter vorübergehender Aufhebung seiner Lagefixierung gestattet. Dabei ist das Feststellmittel durch einen, in diesem Fall doppelseitig wirkenden Hydraulikzylinder mit zwei Kammern gebildet. Die Kammern sind über einen Kanal miteinander verbunden, durch dessen Öffnen und Verschließen sie strömungsleitend miteinander verbunden werden beziehungsweise der Fluss des Hydraulikmittels zwischen ihnen unterbunden wird. In den Kammern ist ein mit einem Anschlagelement über eine Kolbenstange verbundener Kolben geführt. Zur Aufhebung der Lagefixierung des mit dem Kolben verbundenen Anschlagelementes wird der die Kammern verbindende Kanal geöffnet. Sofern nun über eine Kolbenstange Druck auf den Kolben des Hydraulikzylinders ausgeübt wird, kann sich dieser, unter Verdrängung des Hydraulikmittels in einer der Kammern des Zylinders und Überströrnan des Hydraulikmittels in die jeweils andere Kammer, innerhalb des Hydraulikzylinders bewegen. Im Falle des Anschlagens eines mit ihm korrespondierenden Anschlagelementes wird es einem mit dem Kolben über die Kolbenstange verbundenen Anschlagelement dadurch ebenfalls ermöglicht, sich aus seiner ursprünglichen Position in eine andere zu bewegen. Das betreffende Anschlagelement wird durch diese Bewegung passiv der sich ändernden Vorlast nachgeführt und bei Erreichen einer Sollposition durch Schließen des die Kammern des Hydraulikzylinders verbindenden Kanals wieder lagefixiert.

Vorteilhafter Weise ist der Hydraulikzylinder, unabhängig davon, ob er als Stellglied oder als Feststellmittel fungiert, Teil eines Regelungskreises. Durch diesen wird die auf das Lager wirkende Vorlast und der zwischen den Anschlagflächen der Anschlagelemente des Wegbegrenzers bestehende Abstand mittels Sensoren erfasst, daraus in einer Verarbeitungseinheit eine Regelgröße abgeleitet und durch eine Betätigung des Stellgliedes beziehungsweise des Feststellmittels in der zuvor beschriebenen Weise, mit Hilfe eines Reglers eine Anpassung des Federwegs an die Vorlast vorgenommen.

Die Erfindung soll nachfolgend anhand eines Ausführungsbeispiels nochmals näher erläutert werden. In den zugehörigen Zeichnungen zeigen
- Fig. 1:: Eine mögliche Ausbildungsform eines erfindungsgemäß gestalteten Buchsenlagers in einer längsgeschnittenen Darstellung.
- Fig. 2:: Eine andere Ausbildungsform eines Buchsenlagers mit parallel, zur Längsachse des Lagers angeordneten Anschlagelementen in einem Längsschnitt,
- Fig. 3:: Das Lager gemäß Fig. 2 in einer räumlichen Darstellung.

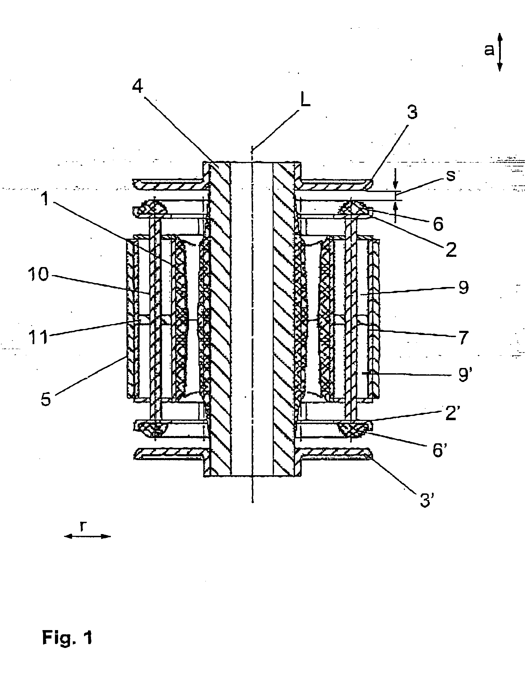

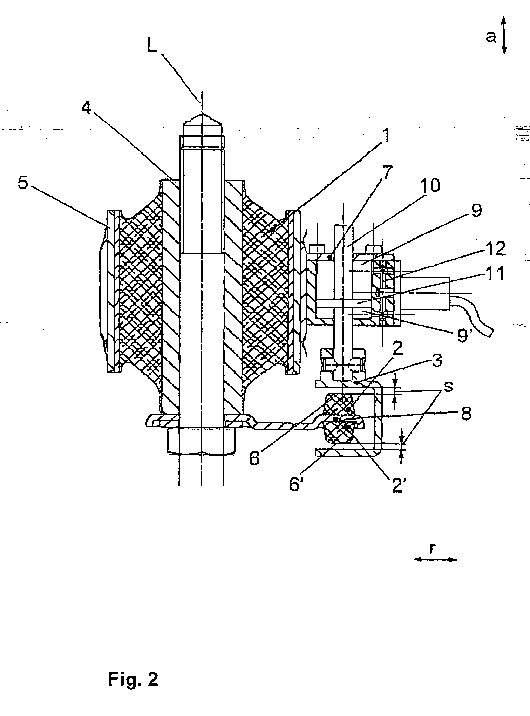

Die Fig. 1 zeigt die Ausführungsform eines Buchsenlagers, welches erfindungsgemäß ausgebildet ist. Das Lager besteht in an sich bekannter Weise aus einem metallischen Innenteil 4, einem das Innenteil 4 konzentrisch umgebenden elastomeren Lagerkörper 1 und einer das Innenteil 4 und den Lagerkörper 1 aufnehmenden und mit ihnen durch Vulkanisation verbundenen Außenhülse 5. An beiden axialen Enden des Lagers sind Axialanschläge als Wegbegrenzer für den axialen Federweg des als elastomere Feder wirkenden Lagerkörpers 1 ausgebildet. Die Wegbegrenzer werden jeweils durch zwei Anschlagelemente 2, 3 bzw. 2', 3' gebildet, von denen eines mit dem Lagerkörper 1 verbunden und dadurch gegenüber dem Lagerkörper 1 lagefixiert ist und das andere in Form eines das Innenteil 4 umgebenden und mit ihm verbundenen metallischen Anschlagtellers ausgebildet ist. Das Anschlagelement 2, 2', welches eine elastomere Anschlagfläche 6, 6' aufweist ist mit dem elastomeren Lagerkörper 1 über die Kolbenstange 10 eines zwischen dem Lagerkörper 1 und der Außenhülse 5 eingeschlossenen und mit dem Lagerkörper 1 verbundenen Hydraulikzylinders 7 in Wirkverbindung gebracht. Der den Lagerkörper 1 ringförmig umgebende Hydraulikzylinder 7 besteht aus zwei Kammern 9, 9', in denen ein Kolben 11 läuft, welcher beidseits über eine Kolbenstange 10 mit je einem Anschlagelement 2, 2' verbunden ist. Entsprechend der Beaufschlagung der Kammern 9, 9' mit dem Hydraulikmittel sind die Anschlagelemente 2, 2' in ihrer axialen Lage lagefixiert. Sofern das Lager so eingestellt ist, dass es bezogen auf den durch den Abstand s der Anschlagelemente bestimmten Gesamtfederweg symmetrisch arbeitet, befindet sich der Kolben 11 des Hydraulikzylinders 7 bei gleicher Vorlast in positiver und negativer Axialrichtung a, wie in der Zeichnung dargestellt, in einer mittleren Stellung. Wenn nun eine Vorlastverschiebung auftritt, werden die beiden Kammern 9, 9' durch Öffnen eines in der Darstellung nicht ersichtlichen Kanals 12 (siehe Fig. 2) miteinander strömungsleitend verbunden. Durch ein Überströmen von Hydraulikmittel von der in der Darstellung oberen Kammer 9 in die untere Kammer 9' oder umgekehrt, kann sich der Kolben 11 im Hydraulikzylinder 7 in axial positiver oder in axial negativer Richtung bewegen. Die Bewegungsrichtung wird von der auftretenden Vorlastverschiebung bestimmt. Eine Verschiebung der Vorlast, wie sie bei einem Fahrwerkslager beispielsweise durch eine zusätzliche Beladung des entsprechenden Fahrzeugs auftritt, und das dadurch bedingte Einfedern des Lagerkörpers 1 würde dazu führen, dass sich der mögliche Federweg für eingetragene Schwingungen auf der einen axialen Seite des Lagers verringert, während er sich gleichzeitig auf der anderen Seite vergrößert. Wird nun aber der die Kammern 9, 9' des Hydraulikzylinders 7 verbindende (hier nicht dargestellte) Kanal 12 geöffnet, kann sich der Kolben 11 mit dem über die Kolbenstange 10 mit ihm verbundenen-Anschlagelement 2. 2' bewegen. Diese Bewegung vollzieht sich gegenläufig zu dem durch die Vorlastverschiebung bewirkten Einfedern des Lagerkörpers 1, Der Abstand s der mit dem Lagerkörper 1 verbundenen Anschlagelemente 2, 2' zu den jeweils korrespondierenden Anschlagelementen 3, 3', respektive der Spalt zwischen den Anschlagflächen der Anschlagelemente 2, 2', 3, 3', bleibt daher nach erneuter Fixierung der Anschlagelemente 2, 2' durch Schließen des Kanals 12, im Ergebnis gleich groß, so dass das Lager gegenüber dynamischen Schwingungen bezogen auf den Federweg seines Lagerkörpers 1 auch bei veränderter (statischer) Vorlast weiterhin in einem symmetrischen Arbeitsbereich arbeitet. Die Steuerung der Öffnung des Kanals 12 (siehe Fig. 2) zwischen den Kammern 9, 9' erfolgt dabei vorzugsweise innerhalb eines Regelkreises, bei dem die jeweils gegebene axiale Vorlast und der an beiden axialen Enden zwischen den Anschlagelementen 2, 2', 3, 3' bestehende Abstand s bzw. Spalt erfasst und auf der Basis einer daraus abgeleiteten Regelgröße die Freigabe oder Sperrung des Kanals 12 des insoweit als Feststellmittel wirkenden Hydraulikzylinders 7 gesteuert wird. Mit dem Schließen der strömungsleitenden Verbindung zwischen den Kammern 9, 9' des Hydraulikzylinders 7 bei Erreichen einer Sollposition des Kolbens 11 wird der in diesem Moment hinsichtlich der Abstände s der Anschlagflächen der Wegbegrenzer gegebene Zustand quasi eingefroren. In der Folge wird vermieden, dass sich der Arbeitsbereich des Gummilagers aufgrund der Veränderung der Vorlast bezogen auf die axial positive oder auf die axial negative Richtung in den progressiven Ast der Federcharakteristik verschiebt. Ohne die in der Fig. 1 dargestellte Ausführungsform grundsätzlich zu verändern, können anstelle des ringförmigen Hydraulikzylinders 7 auch mehrere, auf dem Umfang des Lagerkörpers 1 verteilt angeordnete Hydraulikzylinder zur Einstellung der axialen Position der Anschlagelemente 2, 2' vorgesehen sein, welche die Anschlagelemente 2, 2' gemeinsam tragen.

Die Fig. 2 zeigt eine weitere mögliche Ausführungsform eines erfindungsgemäß gestalteten Buchsenlagers. Hier sind die Wegbegrenzer sowie der Hydraulikzylinder 7, im Gegensatz zu der in der Fig. 1 gezeigten Ausführungsform, so zusagen als externe Baugruppe außerhalb der Lagerhülse 5 und parallel zur Lagerachse L angeordnet. Am Lagerkörper, welcher an einem axialen Ende des Lagers aus der Lagerhülse 5 herausragt, ist ein sich radial nach außen erstreckendes Halteelement 8 angeordnet In der Nähe des radialen Endes dieses Halteelementes 8 ist, bezogen auf die axiale Richtung a, oberhalb und unterhalb des Halteelements 8 je ein Anschlagelement 2, 2' angeordnet. Die Anschlagelemente 2, 2' bilden zusammen mit einem korrespondierenden, U-förmig ausgebildeten weiteren Anschlagelement 3 je einen Wegbegrenzer für die axial positive und die axial negative Richtung. Das U-förmige Anschlagelement 3 ist wiederum über eine Kolbenstange 10 mit dem Kolben 11 eines Hydraulikzylinders 7 verbunden. Ebenso wie bei der zuvor erläuterten Ausführungsform weist der Hydraulikzylinder 7 zwei über einen Kanal 12 miteinander verbindbare Arbeitskammern 9, 9' auf, wobei der Kanal 12 für das Hydraulikmittel in der Fig. 2 ersichtlich ist. Das Funktionsprinzip des Lagers entspricht im Übrigen dem zur Ausführungsform nach der Fig. 1 erläuterten. Das heißt, das Anschlagelement 3, wird sofern seine Bewegung durch Öffnen des Kanals 12 freigegeben ist, je nach Vorlast, durch das korrespondierende Anschlagelement 2 oder 2' mitgeschleppt und nach erneutem Schließen des Kanals 12 in entsprechender axialer Position wieder lagefixiert.

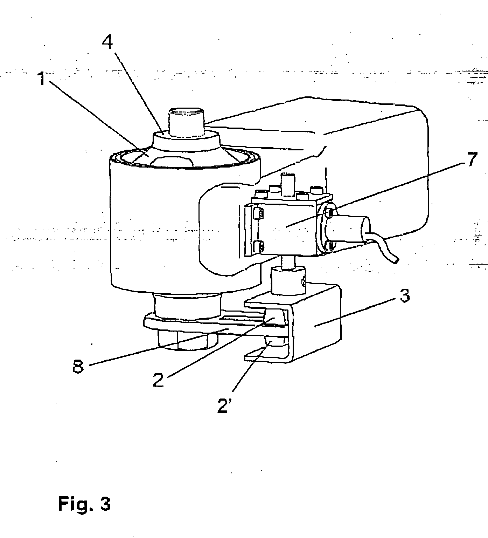

In der Fig. 3 ist das gemäß Fig. 2 im Längsschnitt gezeigte Lager nochmals in einer räumlichen Darstellung wiedergegeben. Zu erkennen sind insbesondere das Lager mit dem Innenteil 4, dem elastomeren Lagerkörper 1 und der Außenhülse 5 sowie die parallel dazu angeordnete Baugruppe zur Ausbildung der lageveränderlichen Anschläge mit dem Hydraulikzylinder 7 und den Anschlagelementen 2, 2', 3, 3'.

### Bezugszeichenliste

- 1: Lagerkörper, elastomere Feder
- 2, 2': Anschlagelement
- 3, 3': Anschlagelement
- 4: Innenteil
- 5: Außenhülse, Lagerhülse
- 6, 6': elastomere Anschlagfläche
- 7: Feststellmittel, Hydraulikzylinder
- 8: Halteelement
- 9, 9': (Arbeits-) Kammern
- 10: Kolbenstange
- 11: Kolben
- 12: Kanal

- a: axial bzw. axiale Richtung
- r: radial bzw. radiale Richtung
- s: Abstand bzw. Spalt
- L: Lagerachse

## Patentansprüche

1. Gummilager mit einem als elastomere Feder ausgebildeten Lagerkörper (1), durch weichen in axialer Richtung (a) und/oder in radialer Richtung (r) in das Lager eingetragene Schwingungen gedämpft werden, und mit Anschlagelementen (2, 2', 3, 3'), welche bezogen auf mindestens eine Dämpfungsrichtung einen oder mehrere den Federweg des Lagerkörpers (1) in der betreffenden Dämpfungsrichtung einschränkende Wegbegrenzer ausbilden, wobei der Freiweg der elastomeren Feder (1) durch den Abstand (s) der Anschlagflächen der den Wegbegrenzer in der jeweiligen Richtung ausbildenden korrespondierenden Anschlagelemente (2, 2', 3, 3') bestimmt ist, von denen eines am oder im Lager lagefixiert ist, während ein mit ihm korrespondierendes Anschlagelement (2, 2') nur gegenüber der elastomeren Feder (1) lagefixiert ist, sich aber beim Einfedern des Lagerkörpers (1) mit der Feder bewegt,
**dadurch gekennzeichnet, dass**
zumindest in einer Dämpfungsrichtung die Einschränkung des Federwegs an die im Betrieb des Lagers in dieser Richtung gegebene Vorlast anpassbar ist, indem die Lagefixierung eines der Anschlagelemente (2, 2', 3, 3') des betreffenden Wegbegrenzers aufhebbar, der Abstand (s) seiner Anschlagfläche zur der des korrespondierenden Anschlagelementes (3, 3', 2, 2') veränderbar und das betreffende Anschlagelement (2, 2', 3, 3') in seiner neuen Lage wieder lagefixierbar ist, wobei die Lageveränderung des Anschlagelements (2, 2', 3, 3') mittels eines am Lager angeordneten Stellgliedes oder durch vorübergehendes Lösen eines Feststellmittels (7) und passives Nachführen der Lage des Anschlagelements entsprechend der Vorlast bewirkbar ist.

2. Gummilager nach Anspruch 1,
**dadurch gekennzeichnet, dass**
mindestens eines der einen Wegbegrenzer ausbildenden Anschlagelemente (2, 2', 3, 3') eine elastomere Anschlagfläche (6, 6') besitzt.

3. Gummilager nach Anspruch 2,
**dadurch gekennzeichnet, dass**
das Lager als elastomeres Buchsenlager mit Axialanschlägen ausgebildet ist, welches aus einem Innenteil (4), dem konzentrisch dazu angeordneten elastomeren Lagerkörper (1) und einer die vorgenannten Teile aufnehmenden und mit ihnen durch Vulkanisation verbundenen Außenhülse (5) besteht.

4. Gummilager nach Anspruch 3,
**dadurch gekennzeichnet, dass**
in dem Lagerkörper (1) mindestens zwei über einen Strömungskanal miteinander verbundene Kammern zur Aufnahme eines fluiden Dämpfungsmittels ausgebildet sind.

5. Gummilager nach Anspruch 3 oder 4,
**dadurch gekennzeichnet, dass**
zur Ausbildung der Axialanschläge an beiden axialen Lagerenden Anschlagelemente (2, 2', 3, 3') konzentrisch zur Lagerachse (L) angeordnet sind, wobei ein Anschlagelement (3, 3') jedes Axialanschlags als ein metallischer Anschlagteller ausgebildet ist, welcher mit dem Innenteil (4) verbunden und **dadurch** gegenüber dem Lager lagefixiert ist und das jeweils korrespondierende Anschlagelement (2, 2') mit der den Lagerkörper (1) ausbildenden elastomeren Feder verbunden und dabei gegenüber der Feder lagefixiert ist und wobei die Lagefixierung des Anschlagelementes [2, 2'] vorübergehend aufhebbar und der Abstand (s) seiner Anschlagfläche gegenüber dem korrespondierenden Anschlagteller (3, 3') zur Anpassung an die Vorlast veränderbar ist.

6. Gummilager nach Anspruch 3 oder 4,
**dadurch gekennzeiclinet, dass**
die Axialanschläge an einem axialen Lagerende parallel zur Lagerachse (L) und außerhalb der Außenhülse (5) angeordnet sind, wobei Anschlagelemente (2, 2') beidseits eines mit dem an diesem Lagerende aus der Lagerhülse (5) herausragenden Lagerkörper (1) verbundenen, sich radial nach außen erstreckenden Halteelements [8] angeordnet sind und in ein u-förmiges Anschlagelement (3) hineinragen, so dass jeweils ein an dem Halteelement (8) angeordnetes Anschlagelement (2, 2') und einer der sich quer zur Lagerachse (L) erstreckenden Schenkel des u-förmigen Anschlagelementes (3) einen Wegbegrenzer ausbilden und wobei die axiale Lage des u-förmigen Anschlagelementes (3) unter vorübergehender Aufhebung seiner Lagefixierung veränderbar ist.

7. Gummilager nach einem der Ansprüche 1 bis 6,
**dadurch gekennzeichnet, dass**
Stellglied oder das Feststellmittel (7) durch einen oder mehrere Hydraulikzylinder ausgebildet ist.

8. Gummilager nach Anspruch 7,
**dadurch gekennzeichnet, dass**
als Feststellmittel ein Hydraulikzylinder (7) mit zwei Kammern (9, 9') angeordnet ist, in denen ein mit einem Anschlagelement (2, 2', 3, 3') über eine. Kolbenstange (10) verbundener Kolben (11) geführt ist, wobei die Kammern (9, 9') des Hydraulikzylinders zur Aufhebung der Lagefixierung des mit dem Kolben (11) verbundenen Anschlagelementes (2, 2', 3, 3') durch das Öffnen eines sie strömungsleitend verbindenden Kanals (12) verbindbar sind, so dass das freigegebene Anschlagelement (2, 2', 3, 3') einer sich ändernden Vorlast nachgeführt und nach Erreichen seiner Sollposition durch das Schließen des Kanals (12) wieder lagefixiert wird.

9. Gummilager nach Anspruch 7 oder 8,
**dadurch gekennzeichnet, dass**
der Hydraulikzylinder (7) Teil eines Regelungskreises ist, bei dem die auf das Lager wirkende Vorlast und der zwischen den Anschlagflächen der Anschlagelemente (2, 2', 3, 3') eines Wegbegrenzers bestehende Abstand (s) mittels Sensoren erfasst, daraus in einer Verarbeitungseinheit eine Regelgröße abgeleitet und durch eine Betätigung des Stellgliedes oder des Feststellmittels (7) mit Hilfe eines Reglers eine Anpassung des Federwegs an die Vorlast erfolgt.
